# EUROPEAN PATENT SPECIFICATION

(11) **EP 4 044 156 B1**
(45) Date of publication and mention of the grant of the patent: **09.07.2025**
(21) Application number: 19948300.9
(22) Date of filing: 10.10.2019
(51) Int. Cl.: G09C 1/00, G06F 9/46, G06F 21/14, G06F 21/72

(54) **SECRET MULTI-ITERATIVE CALCULATION DEVICE, METHOD, AND PROGRAM**
VORRICHTUNG, VERFAHREN UND PROGRAMM ZUR GEHEIMEN MULTIITERATIVEN BERECHNUNG
DISPOSITIF, PROCÉDÉ ET PROGRAMME DE CALCUL MULTI-ITÉRATIF DE SECRET

(43) Date of publication of application: 17.08.2022
(73) Proprietor: NIPPON TELEGRAPH AND TELEPHONE CORPORATION, Chiyoda-ku, Tokyo 100-8116, (JP)
(72) Inventor: HAMADA, Koki, Musashino-shi, Tokyo 180-8585 (JP)
(74) Representative: MERH-IP Matias Erny Reichl Hoffmann Patentanwälte PartG mbB
(86) International application number: PCT/JP2019/040006
(87) International publication number: WO 2021/070322

(56) References cited:
- WO-A1-2013/065687
- WO-A1-2019/181594
- JP-A- H0 298 741
- DAVID MOLNAR ET AL: "The Program Counter Security Model: Automatic Detection and Removal of Control-Flow Side Channel Attacks", IACR, INTERNATIONAL ASSOCIATION FOR CRYPTOLOGIC RESEARCH, vol. 20051213:104400, 13 December 2005 (2005-12-13), pages 1 - 25, XP061001706
- MENG WU ET AL: "Eliminating timing side-channel leaks using program repair", SOFTWARE TESTING AND ANALYSIS, ACM, 2 PENN PLAZA, SUITE 701NEW YORKNY10121-0701USA, 12 July 2018 (2018-07-12), pages 15 - 26, XP058411522, ISBN: 978-1-4503-5699-2, DOI: 10.1145/3213846.3213851

## Description

### [Technical Field]

The present invention relates to cryptographic technology. In particular, the present invention relates to a technique for performing an iterative calculation without revealing input and output values and the number of iterations required until end of calculation.

### [Background Art]

As a method of obtaining a specific calculation result without restoring an encrypted numerical value, there is a method called secure computation (for example, refer to NPL 1). In a method according to NPL 1, by performing encryption involving distributing pieces of a numerical value to three secure computation apparatuses and having the three secure computation apparatuses perform cooperative computing, results of addition and subtraction, constant addition, multiplication, constant multiplication, logical operations (negation, conjunction, disjunction, and exclusive disjunction), and data format conversion (integers and binary numbers) can be held while being distributed to the three secure computation apparatuses or, in other words, while being encrypted.

When performing an iterative calculation of which the number of iterations until the end of the calculation is indeterminate without revealing the number of iterations in addition to not revealing values of input and output, there is a method of obtaining a number N that constitutes an upper bound of the number of iterations until an end of calculation in advance and performing N-number of iterative calculations without updating a value of a calculation result when a condition of the end of the calculation is satisfied midway through the calculation.
NPL2 generally discloses new methods for detecting control-flow side channel attacks, transforming C source code to eliminate such attacks, and checking that the transformed code is free of control-flow side channels.
NPL3 generally discloses a method, based on program analysis and transformation, for eliminating timing side channels in software code that implements security-critical applications.

### [Citation List]

### [Non Patent Literature]

[NPL 1] Koji Chida, Koki Hamada, Dai Ikarashi, Katsumi Takahashi, "A Three-Party Secure Function Evaluation with Lightweight Verifiability Revisited", In CSS, 2010.
[NPL 2] DAVID MOLNAR ET AL, "The Program Counter Security Model: Automatic Detection and Removal of Control-Flow Side Channel Attacks", IACR, INTERNATIONAL ASSOCIATION FOR CRYPTOLOGIC RESEARCH, vol. 20051213:104400,13 December 2015.
[NPL 3] MENG WU ET AL, "Eliminating timing side-channel leaks using program repair", SOFTWARE TESTING AND ANALYSIS, ACM, 2 PENN PLAZA, SUITE 701NEW YORKNY10121-0701USA, 12 July 2018.

### [Summary of the Invention]

### [Technical Problem]

However, when an iterative calculation is further included in an iterative calculation, if an upper bound of the number of iterations until an end of calculation of the outside iterative calculation is represented by N and an upper bound of the number of iterations until an end of calculation of the inside iterative calculation is represented by M, then the inside iterative calculation must be executed MN-number of times.

An object of the present invention is to provide a secure multi-iterative computation apparatus, method, and program that realizes, when an iterative calculation is further included in an iterative calculation, the iterative calculations with a fewer number of executions of the inside iterative calculation.

### [Means for Solving the Problem]

The present invention provides a secure multi-iterative computation apparatus, a secure multi-iterative computation method and a program, having the features of respective independent claims.

A secure multi-iterative computation apparatus according to an aspect of the present invention includes: a secret initialization unit which sets a loop variable that is a predetermined variable to be used in iterative calculations and of which a value may change for each iterative calculation as a dummy value and which sets a state of each iterative calculation to "pre-execution"; and a secure iterative computation unit which outputs a result of performing an iterative calculation that is an object of calculation using an input and the predetermined number of iterations, wherein the secure iterative computation unit includes: (i) a secret input reflection unit which, when a state of an object iterative calculation that is an iterative calculation presently being an object of calculation is "pre-execution" and all inputs of the object iterative calculation are not dummy values, performs a secure computation of an initial value of the loop variable of the object iterative calculation using an input of the object iterative calculation, when the object iterative calculation includes an inside iterative calculation, initializes a state of each inside iterative calculation to "pre-execution", and changes the state of the object iterative calculation to "execution running"; (ii) a secret update unit including: (a) a secret loop variable calculation unit which performs a secure computation of a new value of the loop variable of the object iterative calculation using a value of the loop variable of the object iterative calculation obtained by an immediately prior secure computation and, when the object iterative calculation includes an inside iterative calculation, by performing processing of the secure iterative computation unit with respect to each inside iterative calculation; (b) a secret loop variable update unit which adopts the new value as the value of the loop variable of the object iterative calculation when the state of the object iterative calculation is "execution running" and the state of each iterative calculation inside the object iterative calculation is "end" and which updates the state of each iterative calculation inside the object iterative calculation to "pre-execution"; and (c) a secret end state reflection unit which changes the state of the object iterative calculation to "end" when the state of the object iterative calculation is "execution running" and the value of the loop variable of the object iterative calculation satisfies a predetermined end condition, the secret update unit performing processing for the predetermined number of iterations; and (iii) a secret output calculation unit which performs a secure computation of an output value of the object iterative calculation from the value of the loop variable and outputs the output value when the state of the object iterative calculation is "end".

### [Effects of the Invention]

When an iterative calculation is further included in an iterative calculation, the iterative calculations can be realized with a fewer number of executions of the inside iterative calculation.

### [Brief Description of Drawings]

[Fig. 1]

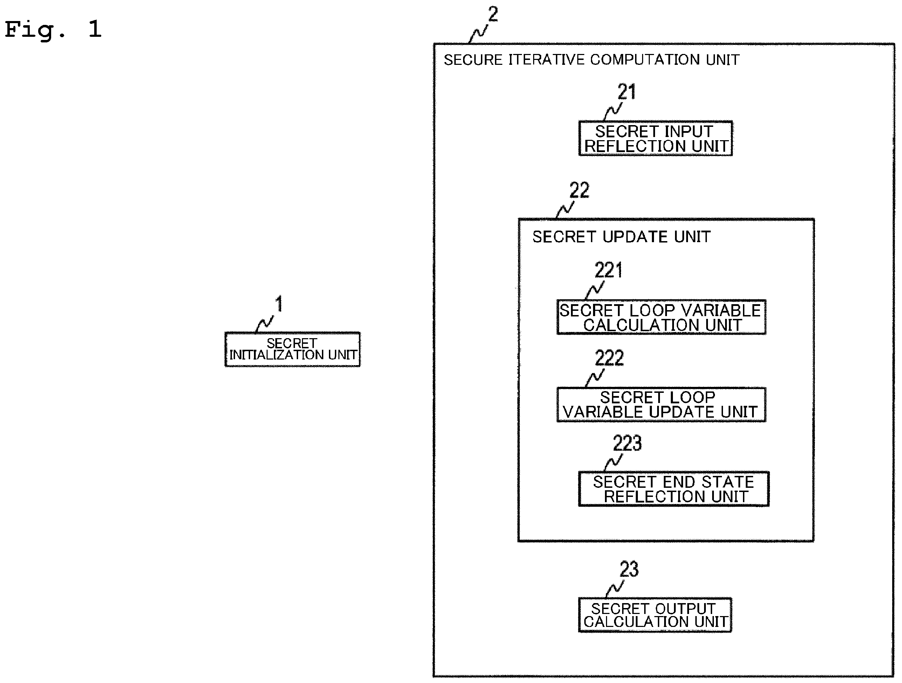

   Fig. 1 is a diagram showing an example of a functional configuration of a secure multi-iterative computation apparatus.
[Fig. 2]

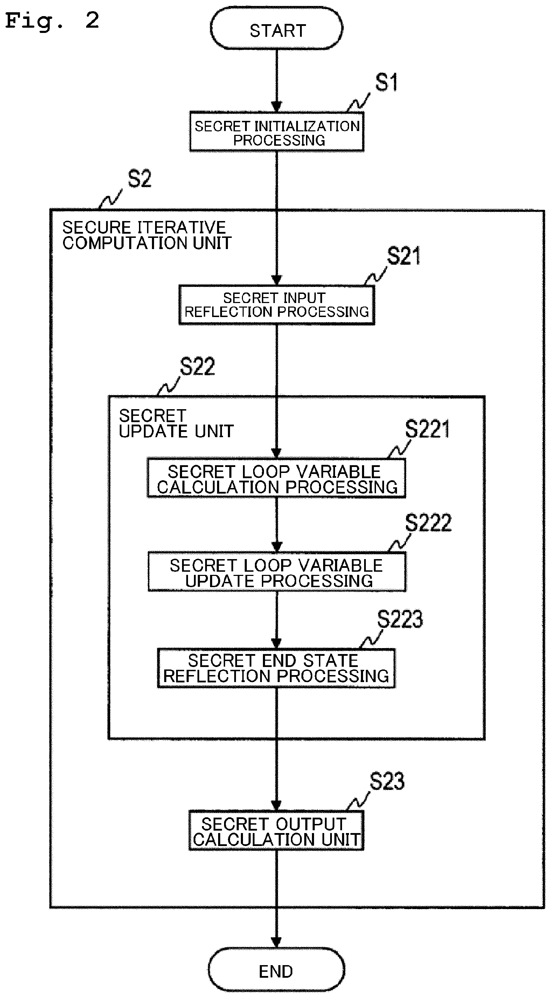

   Fig. 2 is a diagram showing an example of processing procedures of a secure multi-iterative computation method.
[Fig. 3]

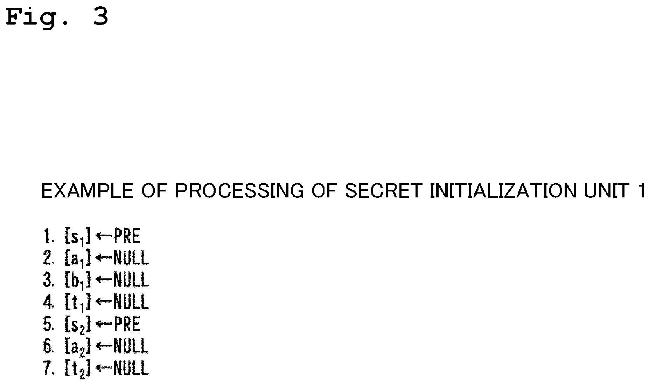

   Fig. 3 is a diagram showing an example of processing of a secret initialization unit 1.
[Fig. 4]

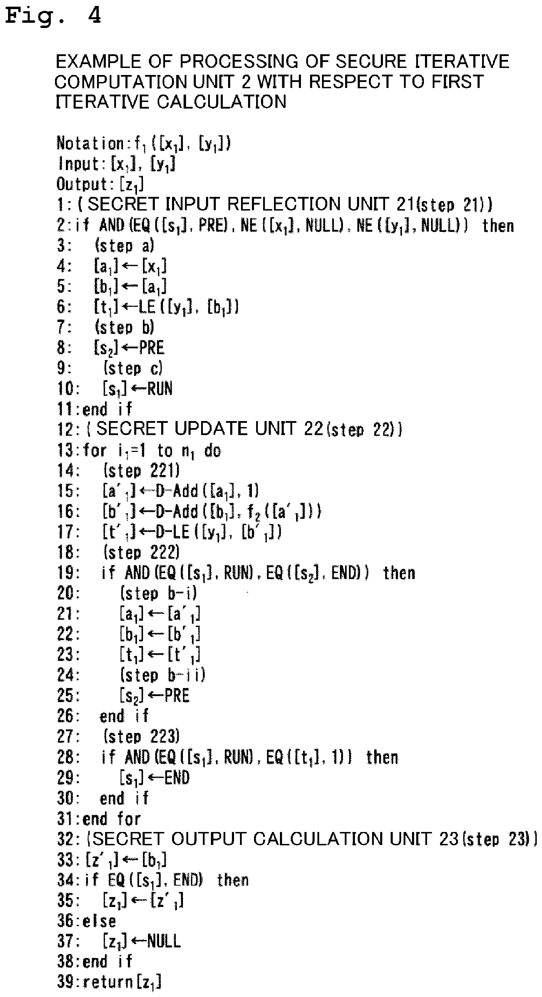

   Fig. 4 is a diagram showing an example of processing of a secure iterative computation unit 2 with respect to a first iterative calculation.
[Fig. 5]

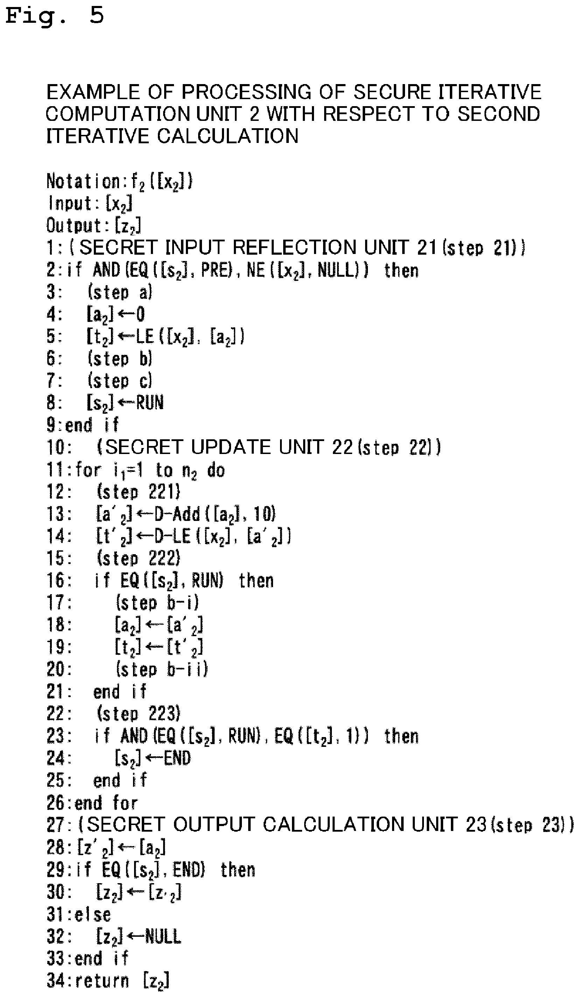

   Fig. 5 is a diagram showing an example of processing of the secure iterative computation unit 2 with respect to a second iterative calculation.
[Fig. 6]

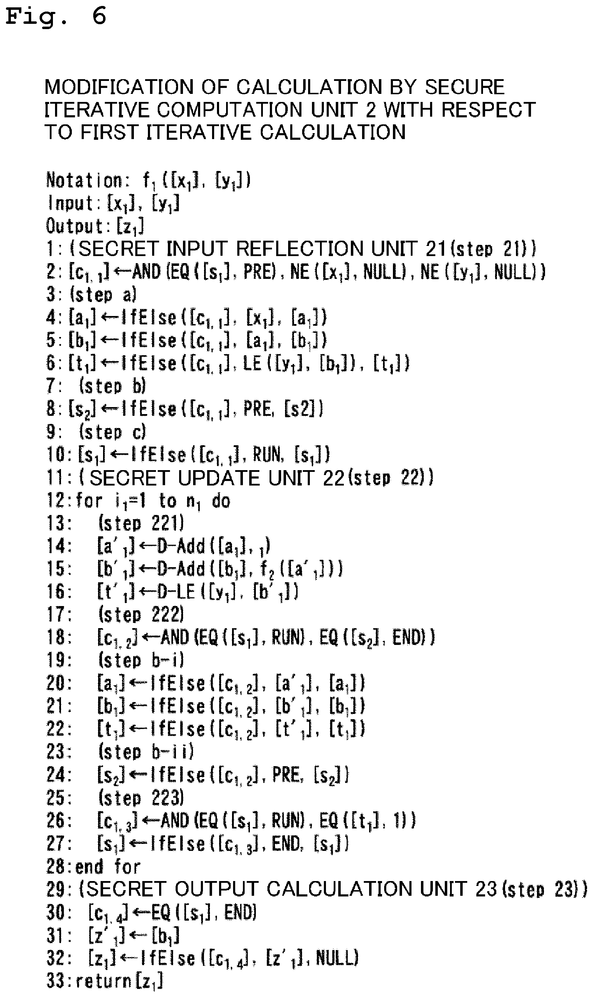

   Fig. 6 is a diagram showing a modification example of the secure iterative computation unit 2 with respect to the first iterative computation.
[Fig. 7]

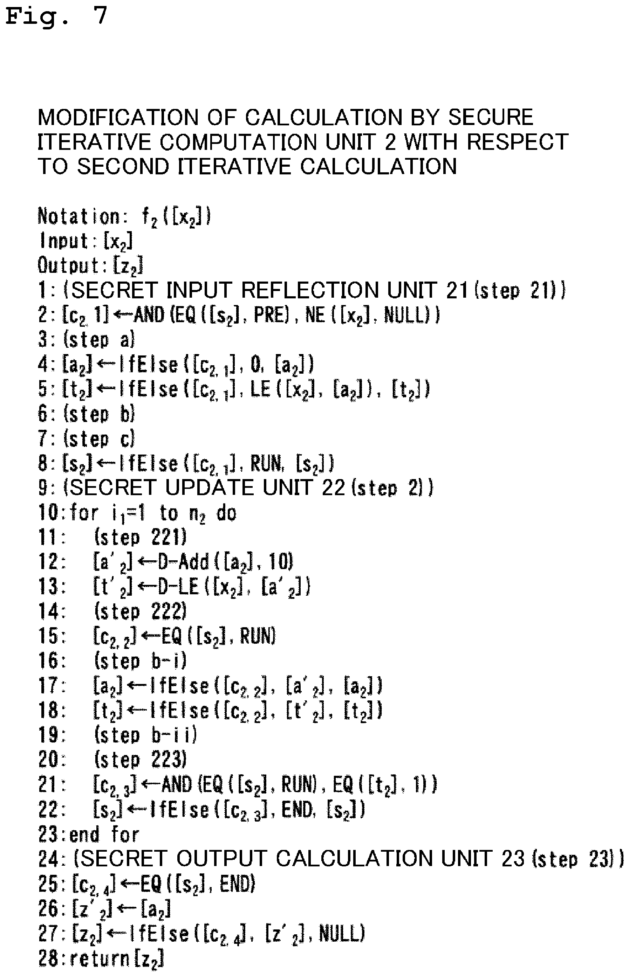

   Fig. 7 is a diagram showing a modification example of the secure iterative computation unit 2 with respect to the second iterative calculation.
[Fig. 8]

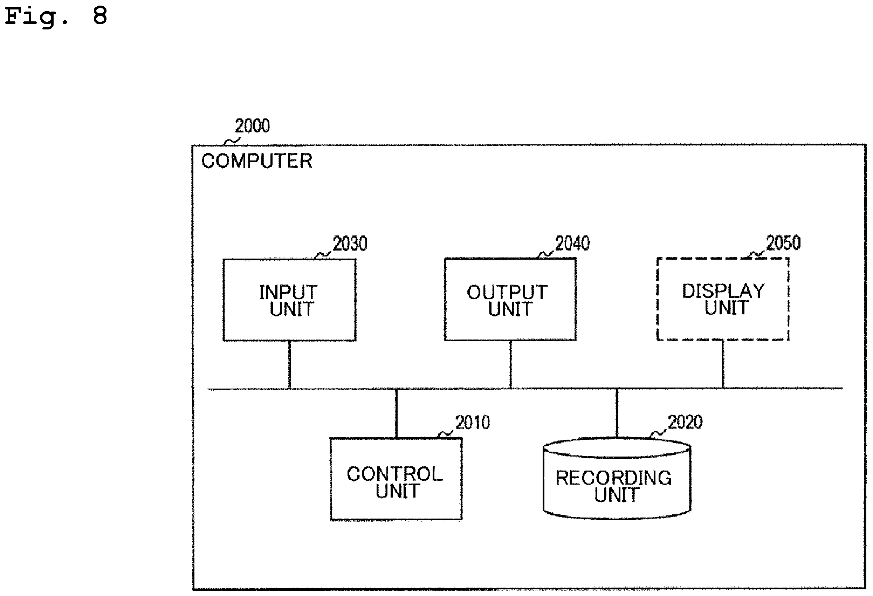

   Fig. 8 is a diagram showing an example of a functional configuration of a computer.

### [Description of Embodiments]

### [Outline]

In the present invention, when an inside iterative calculation does not end after a predetermined number of iterations, a midway value of a loop variable is retained and a calculation of an output value is not performed in an outside iterative calculation. In addition, subsequently, execution of the inside iterative calculation is continued using the value of the loop variable having been retained when the inside iterative calculation is executed once again. In other words, in each outside iterative calculation, an object iterative calculation that is an iterative calculation presently being an object of calculation is only performed when all iterative calculations immediately inside the object iterative calculation have ended. Recursively performing these processing steps enables wasteful calculation in inside iterative calculations to be reduced.

### [Embodiment]

An embodiment of the present invention will be described in detail below. It should be noted that a constituent unit having a same function in the drawings will be denoted by a same numeral and a redundant description will be omitted.

As shown in Fig. 1, a secure multi-iterative computation apparatus is provided with a secret initialization unit 1 and a secure iterative computation unit 2. The secure iterative computation unit 2 is provided with a secret input reflection unit 21, a secret update unit 22, and a secret output calculation unit 23. The secret update unit 22 is provided with a secret loop variable calculation unit 221, a secret loop variable update unit 222, and a secret end state reflection unit 223.

For example, a secure multi-iterative computation method is realized as the respective constituent units of the secure multi-iterative computation apparatus perform processing of step S1 to step S2 shown in Fig. 2. The steps will now be described.

Hereinafter, each constituent unit of the secure multi-iterative computation apparatus will be described.

### < Secret initialization unit 1 >

The secret initialization unit 1 sets a loop variable that is a predetermined variable to be used in iterative calculations and of which a value may change for each iterative calculation as a dummy value and sets a state of each iterative calculation to "pre-execution" (step S1). The dummy value refers to a predetermined value indicating that the value of the loop variable is a dummy.

### < Secure iterative computation unit 2 >

The secure iterative computation unit 2 outputs a result of performing an iterative calculation that is an object of calculation using an input and the predetermined number of iterations (step S2).

The secure iterative computation unit 2 is provided with the secret input reflection unit 21, the secret update unit 22, and the secret output calculation unit 23. For example, processing of step S2 is realized when the secret input reflection unit 21, the secret update unit 22, and the secret output calculation unit 23 perform processing of step S21 to step S23.

### << Secret input reflection unit 21 >>

The secret input reflection unit 21 performs, when a state of an object iterative calculation that is an iterative calculation presently being an object of calculation is "pre-execution" and all inputs of the object iterative calculation are not dummy values, (a) a secure computation of an initial value of the loop variable of the object iterative calculation using an input of the object iterative calculation, (b) when the object iterative calculation includes an inside iterative calculation, initializes a state of each inside iterative calculation to "pre-execution", and (c) changes the state of the object iterative calculation to "execution running" (step S21).

### << Secret update unit 22 >>

The secret update unit 22 is provided with the secret loop variable calculation unit 221, the secret loop variable update unit 222, and the secret end state reflection unit 223.

For example, processing of the secret update unit 22 is realized when the secret loop variable calculation unit 221, the secret loop variable update unit 222, and the secret end state reflection unit 223 perform processing of step S221 to step S223. The secret update unit 22 performs processing of step S221 to step S223 by the secret loop variable calculation unit 221, the secret loop variable update unit 222, and the secret end state reflection unit 223 for a predetermined number of iterations.

### <<< Secret loop variable calculation unit 221 >>>

The secret loop variable calculation unit 221 performs a secure computation of a new value of the loop variable of the object iterative calculation using a value of the loop variable of the object iterative calculation obtained by an immediately prior secure computation and, when the object iterative calculation includes an inside iterative calculation, by performing processing of the secure iterative computation unit 2 with respect to each inside iterative calculation (step S221).

### <<< Secret loop variable update unit 222 >>>

The secret loop variable update unit 222 (b-i) adopts the new value obtained by a secure computation by the secret loop variable calculation unit 221 as the value of the loop variable of the object iterative calculation when the state of the object iterative calculation is "execution running" and the state of each iterative calculation inside the object iterative calculation is "end" and (b-ii) updates the state of each iterative calculation inside the object iterative calculation to "pre-execution" (step S222).

### <<< Secret end state reflection unit 223 >>>

The secret end state reflection unit 223 changes the state of the object iterative calculation to "end" when the state of the object iterative calculation is "execution running" and the value of the loop variable of the object iterative calculation satisfies a predetermined end condition (step S223).

### << Secret output calculation unit 23 >>

The secret output calculation unit 23 performs a secure computation of an output value of the object iterative calculation from the value of the loop variable and outputs the output value when the state of the object iterative calculation is "end" (step S23). The secret output calculation unit 23 outputs a dummy value when the state of the object iterative calculation is not "end".

With conventional art, in order to reliably end an inside iterative calculation every time, a large upper bound is required to be set even when a large number of iterations are only sporadically necessary. In the present embodiment, when an inside iterative calculation does not end, execution of other processing steps is merely "simulated" and a value is not actually updated, and execution of the processing steps is continued once the inside iterative calculation is subsequently restarted. Accordingly, wasteful iterations can be reduced when the number of inside iterations varies under a large upper bound.

More specifically, when the state of the object iterative calculation is "execution running" and the state of each iterative calculation inside the object iterative calculation is not "end" or, in other words, when the value of the loop variable of the object iterative calculation does not satisfy a predetermined end condition, the processing of the secret input reflection unit 21 that performs processing such as performing a secure computation of an initial value of the loop variable of the object iterative calculation is not performed. This is because the secret input reflection unit 21 performs processing when at least the state of the object iterative calculation is "pre-execution". In addition, in this case, the processing of the secret output calculation unit 23 that performs a secure computation of an output value of the object iterative calculation from the value of the loop variable and outputs the output value is not performed. This is because processing of the secret output calculation unit 23 is performed when the state of the object iterative calculation is "end".

Therefore, in this case, the processing of the secret output calculation unit 23 is not performed and the secret update unit 22 continues the iterative calculation using the value of the loop variable of the object iterative calculation obtained by an immediately prior secure computation. In other words, in this case, the value of the loop variable of the object iterative calculation is retained and a secure computation and output of an output value of the object iterative calculation are not performed from the value of the loop variable.

As described above, when an inside iterative calculation does not end after a predetermined number of iterations, a midway value of a loop variable is retained and a calculation of an output value is not performed in an outside iterative calculation. In addition, subsequently, execution of the iterative calculation is continued using the value of the loop variable having been retained when the inside iterative calculation is executed once again. In other words, in each iterative calculation, an object iterative calculation is only performed when all iterative calculations immediately inside the object iterative calculation have ended. Recursively performing these processing steps enables wasteful calculation in inside iterative calculations to be reduced.

When desiring to execute multiple iterative calculations without revealing the number of iterations, the number of inside iterations to be executed can be reduced by slightly increasing the number of outside iterations to be executed. While the number of inside iterations to be executed according to ordinary methods is obtained as a product of upper bounds of the numbers of iterations of respective tiers and becomes extremely large as a consequence, the present invention is capable of significantly reducing the number of inside iterations to be executed.

For example, when it is known that an upper bound of the number of outside iterations is 6, an upper bound of the number of inside iterations is 50, and the number of inside iterations only exceeds 25 twice, with a conventional method, the inside iterative calculation must be executed 300 = 50 × 6 times. However, according to the present invention, for example, by setting the upper bound of the number of outside iterations to 8 and the upper bound of the number of inside iterations to 25, the number of inside iterations can be limited to 200 = 25 × 8 executions.

Let a time excluding a processing time of an iterative calculation inside an iterative calculation x among a processing time required by one iteration of x when the present embodiment is not used be represented by f(x), an upper bound of the number of iterations be represented by N(x), and a product of upper bounds of the numbers of iterations of respective iterative calculations including x be represented by T(x) (where T(x) = 1 when x represents an outermost iterative calculation), and let a time excluding a processing time of an iterative calculation inside an iterative calculation x among a processing time required by one iteration of x when the present embodiment is used be represented by f'(x), an upper bound of the number of iterations be represented by N'(x), and a product of upper bounds of the numbers of iterations of respective iterative calculations including x be represented by T' (x) (where T' (x) = 1 when x represents an outermost iterative calculation). In this case, when the upper bound N' (x) of the number of iterations of each iterative calculation x can be set so as to satisfy Σx (T(x)N(x)f(x)) > Σx (T'(x)N'(x)f'(x)), a total processing time can be reduced by the present embodiment.

### [Example of iterative calculation]

Fig. 3 and Fig. 4 show an example of processing by the secure multi-iterative computation apparatus when the secure multi-iterative computation apparatus performs iterative calculations constituted by a first iterative calculation and a second iterative calculation.

The first iterative calculation will be described as f₁(x₁, y₁). f₁(x₁, y₁) is also a function that outputs a minimum u(n) = Σᵢ₌₀ⁿ⁻¹f₂(x₁ + i) that satisfies y₁ ≤ u(n) and 1 ≤ n. Let us assume that an input of f₁(x₁, y₁) is x₁, y₁ and an output of f₁(x₁, y₁) is z₁. Let a loop variable of f₁(x₁, y₁) be represented by a₁, b₁, t₁. In addition, let a variable representing a state of the first iterative calculation be represented by s₁. Hereinafter, the variable s₁ representing the state of the first iterative calculation may simply be referred to as a state s₁ of the first iterative calculation. Let us assume that the predetermined number of iterations of the first iterative calculation is n₁, where n₁ is a predetermined positive integer.

In addition, the second iterative calculation will be described as f₂(x₂). f₂(x₂) is also a function that outputs a minimum multiple of 10 that is equal to or larger than x₂. Let us assume that an input of f₂(x₂) is x₂ and an output of f₂(x₂) is z₂. Let a loop variable of f₂(x₂) be represented by a₂, t₂. In addition, let a variable representing a state of the second iterative calculation be represented by s₂. Hereinafter, the variable s₂ representing the state of the second iterative calculation may simply be referred to as a state s₂ of the second iterative calculation. Let us assume that the predetermined number of iterations of the second iterative calculation is n₂, where n₂ is a predetermined positive integer.

Hereinafter, a notation used in Fig. 3 and Fig. 4 will be described.
[x] represents a secure value of x.
[z] ← [a] + [b] means calculating a secure value of z such that z = a + b.
[z] ← [a] [b] means calculating a secure value of z such that z = ab.
[z] ← EQ([a], [b]) means calculating a secure value of z such that z = 1 when a = b and z = 0 when not a = b.
[z] ← LE([a], [b]) means calculating a secure value of z such that z = 1 when a ≤ b and z = 0 when not a ≤ b.
[z] ← NE([a], [b]) means calculating a secure value of z such that z = 1 when a ≠ b and z = 0 when not a ≠ b.
[z] ← IfElse([c], [a], [b]) means calculating a secure value of z such that z = a when c = 1 and z = b when C = 0.
[z] ← AND ([a₁], [a₂], ..., [aₙ]) means calculating a secure value of z such that z = a₁a₂...aₙ.

NULL represents a predetermined dummy value. Let us assume that whether or not a given variable v is a dummy can be determined based on whether or not v = NULL. Let us assume that processing for making v a dummy can be realized by v ← NULL and that processing for making v a value v that is not a dummy can be realized by v ← x. Alternatively, a different variable Dummy(v) may be prepared for each variable v, in which case Dummy (v) = 1 when the variable v is a dummy and Dummy (v) = 0 when the variable v is not a dummy. In this case, processing for making v a dummy can be realized by Dummy (v) ← 1 and processing for making v a value v that is not a dummy can be realized by Dummy (v) ← 0.

Let us assume that PRE, RUN, and END respectively represent "pre-execution", "execution running", and "end".

In the secret loop variable calculation unit 221, each processing step is calculated such that when a dummy is included as a part of an input, an output is also a dummy. Such a calculation will be referred to as a dummy-accommodating calculation. Respective dummy-accommodating calculations will be described as follows.

[z] ← D-Add([a], [b]) means performing a dummy-accommodating calculation for obtaining a secure value of z such that z = a + b.

[z] ← D-LE([a], [b]) means performing a dummy-accommodating calculation for obtaining a secure value of z such that z = 1 when a ≤ b and z = 0 when not a ≤ b.

It should be noted that secure iterative computation are dummy-accommodating.

In the case of this example, processing of the secret initialization unit 1 corresponds to "1:" to "7:" in Fig. 3.

Processing of the secure iterative computation unit 2 corresponds to "1:" to "39:" in Fig. 4.

Processing of the secret input reflection unit 21 corresponds to "1:" to "11:" in Fig. 4.

Processing of the secret update unit 22 corresponds to "12:" to "31:" in Fig. 4.

Processing of the secret loop variable calculation unit 221 corresponds to "12:" to "17:" in Fig. 4. In "16:" in Fig. 4, processing of the secure iterative computation unit 2 with respect to the second iterative calculation inside the first iterative calculation or, in other words, calculation processing of f₂([a₁']) is performed. Processing of the secure iterative computation unit 2 with respect to the second iterative calculation corresponds to "1:" to "34:" in Fig. 5.

Processing of the secret loop variable update unit 222 corresponds to "18:" to "26:" in Fig. 4.

Processing of the secret end state reflection unit 223 corresponds to "27:" to "31:" in Fig. 4.

Processing of the secret output calculation unit 23 corresponds to "32:" to "39:" in Fig. 4.

### [Modification]

While an embodiment of the present invention has been described above, specific configurations are not limited to the embodiment and it is needless to say that the present invention also includes appropriate modifications in design or the like having been made.

The various processing steps explained in the embodiment may not only be executed in chronological order according to the described sequences but may also be executed in parallel or on an individual basis in accordance with processing capabilities of an apparatus to be used to execute the processing steps or as may be necessary.

For example, exchange of data between constituent units of the secure multi-iterative computation apparatus may be performed either directly or via a storage unit (not illustrated).

In addition, when performing conditional processing, processing of both a case where a condition is satisfied so as not to reveal a value that constitutes a condition (a secure value) and a case where the condition is not satisfied may be executed by changing a write destination to a temporary variable.

For example, with respect to a secure value [aᵢ] of each value aᵢ that is changed in at least one of the cases, when a secure value of a value when the condition is satisfied is represented by [tᵢ], a secure value of a value when the condition is not satisfied is represented by [fᵢ], and a secure value of a bit representing that the condition is satisfied (1) or not satisfied (0) is represented by [c], a calculation of [aᵢ] ← [c] × [tᵢ] + (1 - [c]) × [fᵢ] may be performed.

In other words, the secret input reflection unit 21, the secret loop variable update unit 222, the secret end state reflection unit 223, and the secret output calculation unit 23 may perform processing while securing whether or not a present case corresponds to each case.

An example of processing performed by the secret input reflection unit 21, the secret loop variable update unit 222, the secret end state reflection unit 223, and the secret output calculation unit 23 while securing whether or not a present case corresponds to each case is shown in Fig. 6 and Fig. 7. Symbols and notation that appear in Fig. 6 and Fig. 7 are similar to those described in [Example of iterative calculation].

Processing of the secret input reflection unit 21 corresponds to "1:" to "10:" in Fig. 6.

Processing of the secret update unit 22 corresponds to "11:" to "33:" in Fig. 6.

Processing of the secret loop variable calculation unit 221 corresponds to "13:" to "16:" in Fig. 6. In "15:" in Fig. 6, processing of the secure iterative computation unit 2 with respect to the second iterative calculation inside the first iterative calculation or, in other words, calculation processing of f₂([a₁']) is performed. Processing of the secure iterative computation unit 2 with respect to the second iterative calculation in this case corresponds to "1:" to "28:" in Fig. 7.

Processing of the secret loop variable update unit 222 corresponds to "17:" to "24:" in Fig. 6.

Processing of the secret end state reflection unit 223 corresponds to "26:" to "27:" in Fig. 6.

Processing of the secret output calculation unit 23 corresponds to "29:" to "33:" in Fig. 6.

### [Program and recording medium]

When realizing the various processing functions in the various apparatuses described above with a computer, processing contents of functions which each apparatus must be equipped with are described by a program. In addition, the various processing functions in the various apparatuses described above are realized on the computer by having the computer execute the program. For example, the various processing steps described above can be performed by having a recording unit 2020 of a computer shown in Fig. 8 read a program to be executed and cause a control unit 2010, an input unit 2030, an output unit 2040, and the like to perform operations.

The program describing the processing contents can be recorded in a computer-readable recording medium. Any computer-readable recording medium may be used such as a magnetic recording apparatus, an optical disk, a magneto-optical recording medium, and a semiconductor memory.

In addition, the program is distributed by, for example, selling, transferring, or lending a portable recording medium such as a DVD or a CD-ROM on which the program is recorded. Furthermore, a configuration may be adopted in which the program is stored in a storage apparatus of a server computer and the server computer transmits the program to other computers via network in order to distribute the program.

For example, a computer that executes such a program first temporarily stores the program recorded in a portable recording medium or the program transmitted from a server computer in its own storage apparatus. In addition, when executing processing, the computer reads the program stored in its own storage apparatus and executes processing in accordance with the read program. Furthermore, as an alternative execution mode of the program, a computer may read a program directly from a portable recording medium and execute processing in accordance with the program or, every time the program is transmitted from a server computer to the computer, the computer may sequentially execute processing in accordance with the received program. In addition, a configuration may be adopted in which a program is not transmitted to the computer from a server computer but the processing described above is executed by a so-called ASP (Application Service Provider) type service which realizes a processing function only by issuing an execution instruction and acquiring a result thereof. It should be noted that the program according to the present mode includes information which is to be processed by an electronic computer and which is equivalent to a program (data or the like which is not a direct command intended for a computer but which has a property of specifying processing by the computer).

In addition, in the mode, while the present apparatus is configured by having a computer execute a prescribed program, at least a part of processing contents thereof may be realized by hardware.

## Claims

1. An apparatus used in secure multi-iterative computation for performing an iterative calculation without revealing input and output values and without revealing a number of iterations that are required, the apparatus comprising:
a secret initialization unit (1) which sets a loop variable that is a predetermined variable to be used in iterative calculations and of which a value may change for each iterative calculation as a dummy value and which sets a state of each iterative calculation to "pre-execution"; and
a secure iterative computation unit (2) which outputs a result of performing an iterative calculation that is an object of calculation using an input and the predetermined number of iterations, wherein
the secure iterative computation unit (2) includes:
(i) a secret input reflection unit (21) which, when a state of an object iterative calculation that is an iterative calculation presently being an object of calculation is "pre-execution" and all inputs of the object iterative calculation are not dummy values, performs a secure computation of an initial value of the loop variable of the object iterative calculation using an input of the object iterative calculation, when the object iterative calculation includes an inside iterative calculation, initializes a state of each inside iterative calculation to "pre-execution", and changes the state of the object iterative calculation to "execution running";
(ii) a secret update unit (22) including: (a) a secret loop variable calculation unit (221) which performs a secure computation of a new value of the loop variable of the object iterative calculation using a value of the loop variable of the object iterative calculation obtained by an immediately prior secure computation and, when the object iterative calculation includes an inside iterative calculation, by performing recursively processing of the secure iterative computation unit (2) with respect to each inside iterative calculation; (b) a secret loop variable update unit (222) which adopts the new value as the value of the loop variable of the object iterative calculation when the state of the object iterative calculation is "execution running" and the state of each iterative calculation inside the object iterative calculation is "end" and which updates the state of each iterative calculation inside the object iterative calculation to "pre-execution"; and (c) a secret end state reflection unit (223) which changes the state of the object iterative calculation to "end" when the state of the object iterative calculation is "execution running" and the value of the loop variable of the object iterative calculation satisfies a predetermined end condition, the secret update unit (22) performing processing for the predetermined number of iterations; and
(iii) a secret output calculation unit (23) which performs a secure computation of an output value of the object iterative calculation from the value of the loop variable and outputs the output value when the state of the object iterative calculation is "end", wherein, when the state of the object iterative calculation is not "end", the value of the loop variable of the object iterative calculation is retained and the secret output calculation unit (23) outputs the dummy value without performing the secure computation of the output value of the object iterative calculation from the value of the loop variable, so that when an inside iterative calculation performed by the secure iterative computation unit (2) does not end after the predetermined number of iterations, a midway value of the loop variable is retained and a calculation of an output value is not performed in an outside iterative calculation and execution of the inside iterative calculation is continued, using the midway value of the loop variable having been retained, when the inside iterative calculation is executed once again,
wherein the secret input reflection unit (21), the secret loop variable update unit (222), the secret end state reflection unit (223), and the secret output calculation unit (23) perform processing while securing whether or not a present case corresponds to a case where a condition is satisfied so as not to reveal a value that constitutes the condition or a case where the condition is not satisfied.

2. A method used in secure multi-iterative computation for performing an iterative calculation without revealing input and output values and without revealing a number of iterations that are required, the method comprising:
a secret initialization step (S1) in which a secret initialization unit sets a loop variable that is a predetermined variable to be used in iterative calculations and of which a value may change for each iterative calculation as a dummy value and which sets a state of each iterative calculation to "pre-execution"; and
a secure iterative computation step (S2) in which a secure iterative computation unit outputs a result of performing an iterative calculation that is an object of calculation using an input and the predetermined number of iterations, wherein
the secure iterative computation step (S2) includes:
(i) a secret input reflecting step (S21) in which, when a state of an object iterative calculation that is an iterative calculation presently being an object of calculation is "pre-execution" and all inputs of the object iterative calculation are not dummy values, a secret input reflection unit performs a secure computation of an initial value of the loop variable of the object iterative calculation using an input of the object iterative calculation, when the object iterative calculation includes an inside iterative calculation, the secret input reflection unit initializes a state of each inside iterative calculation to "pre-execution" and changes the state of the object iterative calculation to "execution running";
(ii) a secret update step (S22) which includes: (a) a secret loop variable calculation step (S221) in which a secret loop variable calculation unit performs a secure computation of a new value of the loop variable of the object iterative computation using a value of the loop variable of the object iterative calculation obtained by an immediately prior secure computation and, when the object iterative calculation includes an inside iterative calculation, by performing recursively processing of the secure iterative computation unit with respect to each inside iterative calculation; (b) a secret loop variable update step (S222) in which a secret loop variable update unit adopts the new value as the value of the loop variable of the object iterative calculation when the state of the object iterative calculation is "execution running" and the state of each iterative calculation inside the object iterative calculation is "end" and which updates the state of each iterative calculation inside the object iterative calculation to "pre-execution"; and (c) a secret end state reflection step (S223) in which a secret end state reflection unit changes the state of the object iterative calculation to "end" when the state of the object iterative calculation is "execution running" and the value of the loop variable of the object iterative calculation satisfies a predetermined end condition, the secret update unit performing processing for the predetermined number of iterations; and
(iii) a secret output calculation step (S23) in which a secret output calculation unit performs a secure computation of an output value of the object iterative calculation from the value of the loop variable and outputs the output value when the state of the object iterative calculation is "end", wherein, when the state of the object iterative calculation is not "end", the value of the loop variable of the object iterative calculation is retained and the secret output calculation unit outputs the dummy value without performing the secure computation of the output value of the object iterative calculation from the value of the loop variable, so that when an inside iterative calculation performed by the secure iterative computation unit does not end after the predetermined number of iterations, a midway value of the loop variable is retained and a calculation of an output value is not performed in an outside iterative calculation and execution of the inside iterative calculation is continued, using the midway value of the loop variable having been retained, when the inside iterative calculation is executed once again,
wherein the secret input reflection step (S21), the secret loop variable update step (S222), the secret end state reflection step (S223), and the secret output calculation step (S23) perform processing while securing whether or not a present case corresponds to a case where a condition is satisfied so as not to reveal a value that constitutes the condition or a case where the condition is not satisfied.

3. A program for causing a computer to function as the respective units of the secure multi-iterative computation apparatus according to claim 1.

## Patentansprüche

1. Vorrichtung, die in einer sicheren multiiterativen Berechnung verwendet wird, zum Durchführen einer iterativen Berechnung, ohne Eingabe- und Ausgabewerte zu offenbaren und ohne eine Anzahl von Iterationen zu offenbaren, die erforderlich ist, wobei die Vorrichtung Folgendes aufweist:
eine Geheiminitialisierungseinheit (1), die eine Schleifenvariable einstellt, die eine vorbestimmte Variable ist, die in iterativen Berechnungen zu verwenden ist, und von der sich ein Wert für jede iterative Berechnung als ein Blindwert ändern kann, und die einen Zustand jeder iterativen Berechnung auf "vor Ausführung" einstellt; und
eine Einheit (2) zur sicheren iterativen Berechnung, die ein Ergebnis des Durchführens einer iterativen Berechnung ausgibt, die ein Objekt der Berechnung unter Verwendung einer Eingabe und der vorbestimmten Anzahl von Iterationen ist, wobei
die Einheit (2) zur sicheren iterativen Berechnung Folgendes aufweist:
(i) eine geheime Eingabewiderspieglungseinheit (21), die, wenn ein Zustand einer iterativen Objektberechnung, die eine iterative Berechnung ist, die gegenwärtig ein Objekt der Berechnung ist, "vor Ausführung" ist und alle Eingaben der iterativen Objektberechnung keine Blindwerte sind, eine sichere Berechnung eines Anfangswerts der Schleifenvariable der iterativen Objektberechnung unter Verwendung einer Eingabe der iterativen Objektberechnung durchführt, wenn die iterative Objektberechnung eine innere iterative Berechnung enthält, einen Zustand jeder inneren iterativen Berechnung auf "vor Ausführung" initialisiert und den Zustand der iterativen Objektberechnung auf "Ausführung läuft" ändert;
(ii) eine geheime Aktualisierungseinheit (22), die Folgendes aufweist: (a) eine geheime Schleifenvariablenberechnungseinheit (221), die eine sichere Berechnung eines neuen Werts der Schleifenvariablen der iterativen Objektberechnung unter Verwendung eines Werts der Schleifenvariablen der iterativen Objektberechnung durchführt, der durch eine unmittelbar vorhergehende sichere Berechnung erhalten wird, und, wenn die iterative Objektberechnung eine innere iterative Berechnung enthält, durch Durchführen einer rekursiven Bearbeitung der Einheit (2) zur sicheren iterativen Berechnung in Bezug auf jede innere iterative Berechnung; (b) eine geheime Schleifenvariablenaktualisierungseinheit (222), die den neuen Wert als den Wert der Schleifenvariablen der iterativen Objektberechnung annimmt, wenn der Zustand der iterativen Objektberechnung "Ausführung läuft" ist und der Zustand jeder iterativen Berechnung innerhalb der iterativen Objektberechnung "Ende" ist, und die den Zustand jeder iterativen Berechnung innerhalb der iterativen Objektberechnung auf "vor Ausführung" aktualisiert; und (c) eine geheime Endzustandswiderspieglungseinheit (223), die den Zustand der iterativen Objektberechnung auf "Ende" ändert, wenn der Zustand der iterativen Objektberechnung "Ausführung läuft" ist und der Wert der Schleifenvariablen der iterativen Objektberechnung eine vorbestimmte Endbedingung erfüllt, wobei die geheime Aktualisierungseinheit (22) eine Bearbeitung für die vorbestimmte Anzahl von Iterationen durchführt; und
(iii) eine geheime Ausgabeberechnungseinheit (23), die eine sichere Berechnung eines Ausgabewerts der iterativen Objektberechnung aus dem Wert der Schleifenvariablen durchführt und den Ausgabewert ausgibt, wenn der Zustand der iterativen Objektberechnung "Ende" ist, wobei, wenn der Zustand der iterativen Objektberechnung nicht "Ende" ist, der Wert der Schleifenvariablen der iterativen Objektberechnung beibehalten wird und die geheime Ausgabeberechnungseinheit (23) den Blindwert ausgibt, ohne die sichere Berechnung des Ausgabewerts der iterativen Objektberechnung aus dem Wert der Schleifenvariablen durchzuführen, so dass, wenn eine innere iterative Berechnung, die durch die Einheit (2) zur sicheren iterativen Berechnung durchgeführt wird, nach der vorbestimmten Anzahl von Iterationen nicht endet, ein mittlerer Wert der Schleifenvariablen beibehalten wird und eine Berechnung eines Ausgabewerts nicht in einer äußeren iterativen Berechnung durchgeführt wird und die Ausführung der inneren iterativen Berechnung unter Verwendung des mittleren Werts der Schleifenvariablen, der beibehalten wurde, fortgesetzt wird, wenn die innere iterative Berechnung erneut ausgeführt wird,
wobei die geheime Eingabewiderspieglungseinheit (21), die geheime Schleifenvariablenaktualisierungseinheit (222), die geheime Endzustandswiderspieglungseinheit (223) und die geheime Ausgabeberechnungseinheit (23) eine Bearbeitung durchführen, während sie sichern, ob ein gegenwärtiger Fall einem Fall entspricht, in dem eine Bedingung erfüllt ist, oder nicht, um einen Wert, der die Bedingung darstellt, oder einen Fall, in dem die Bedingung nicht erfüllt ist, nicht zu offenbaren.

2. Verfahren, das in einer sicheren multiiterativen Berechnung verwendet wird, zum Durchführen einer iterativen Berechnung, ohne Eingabe- und Ausgabewerte zu offenbaren und ohne eine Anzahl von Iterationen zu offenbaren, die erforderlich ist, wobei das Verfahren Folgendes aufweist:
einen geheimen Initialisierungsschritt (S1), in dem eine geheime Initialisierungseinheit eine Schleifenvariable einstellt, die eine vorbestimmte Variable ist, die in iterativen Berechnungen zu verwenden ist, und von der sich ein Wert für jede iterative Berechnung als ein Blindwert ändern kann, und die einen Zustand jeder iterativen Berechnung auf "vor Ausführung" einstellt; und
einen Schritt (S2) einer sicheren iterativen Berechnung, in dem eine Einheit zur sicheren iterativen Berechnung ein Ergebnis des Durchführens einer iterativen Berechnung ausgibt, die ein Objekt der Berechnung unter Verwendung einer Eingabe und der vorbestimmten Anzahl von Iterationen ist, wobei
der Schritt (S2) der sicheren iterativen Berechnung Folgendes aufweist:
(i) einen Schritt (S21) einer Geheimeingabewiderspiegelung, in dem, wenn ein Zustand einer iterativen Objektberechnung, die eine iterative Berechnung ist, die gegenwärtig ein Objekt der Berechnung ist, "vor Ausführung" ist und alle Eingaben der iterativen Objektberechnung keine Blindwerte sind, eine Geheimeingabewiderspiegelungseinheit eine sichere Berechnung eines Anfangswerts der Schleifenvariable der iterativen Objektberechnung unter Verwendung einer Eingabe der iterativen Objektberechnung durchführt, wenn die iterative Objektberechnung eine innere iterative Berechnung enthält, die geheime Eingabewiderspiegelungseinheit einen Zustand jeder inneren iterativen Berechnung auf "vor Ausführung" initialisiert und den Zustand der iterativen Objektberechnung auf "Ausführung läuft" ändert;
(ii) einen geheimen Aktualisierungsschritt (S22), der Folgendes aufweist: (a) einen geheimen Schleifenvariablenberechnungsschritt (S221), in dem eine geheime Schleifenvariablenberechnungseinheit eine sichere Berechnung eines neuen Werts der Schleifenvariablen der iterativen Objektberechnung unter Verwendung eines Werts der Schleifenvariablen der iterativen Objektberechnung durchführt, der durch eine unmittelbar vorhergehende sichere Berechnung erhalten wird, und, wenn die iterative Objektberechnung eine innere iterative Berechnung enthält, durch Durchführen einer rekursiven Bearbeitung der Einheit zur sicheren iterativen Berechnung in Bezug auf jede innere iterative Berechnung; (b) einen geheimen Schleifenvariablenaktualisierungsschritt (S222), in dem eine geheime Schleifenvariablenaktualisierungseinheit den neuen Wert als den Wert der Schleifenvariablen der iterativen Objektberechnung annimmt, wenn der Zustand der iterativen Objektberechnung "Ausführung läuft" ist und der Zustand jeder iterativen Berechnung innerhalb der iterativen Objektberechnung "Ende" ist, und die den Zustand jeder iterativen Berechnung innerhalb der iterativen Objektberechnung auf "vor Ausführung" aktualisiert; und (c) einen geheimen Endzustandswiderspiegelungsschritt (S223), in dem eine geheime Endzustandswiderspiegelungseinheit den Zustand der iterativen Objektberechnung auf "Ende" ändert, wenn der Zustand der iterativen Objektberechnung "Ausführung läuft" ist und der Wert der Schleifenvariablen der iterativen Objektberechnung eine vorbestimmte Endbedingung erfüllt, wobei die geheime Aktualisierungseinheit eine Bearbeitung für die vorbestimmte Anzahl von Iterationen durchführt; und
(iii) einen geheimen Ausgabeberechnungsschritt (S23), in dem eine geheime Ausgabeberechnungseinheit eine sichere Berechnung eines Ausgabewerts der iterativen Objektberechnung aus dem Wert der Schleifenvariablen durchführt und den Ausgabewert ausgibt, wenn der Zustand der iterativen Objektberechnung "Ende" ist, wobei, wenn der Zustand der iterativen Objektberechnung nicht "Ende" ist, der Wert der Schleifenvariablen der iterativen Objektberechnung beibehalten wird und die geheime Ausgabeberechnungseinheit den Blindwert ausgibt, ohne die sichere Berechnung des Ausgabewerts der iterativen Objektberechnung aus dem Wert der Schleifenvariablen durchzuführen, so dass, wenn eine innere iterative Berechnung, die durch die Einheit zur sicheren iterativen Berechnung durchgeführt wird, nach der vorbestimmten Anzahl von Iterationen nicht endet, ein mittlerer Wert der Schleifenvariablen beibehalten wird und eine Berechnung eines Ausgabewerts nicht in einer äußeren iterativen Berechnung durchgeführt wird und die Ausführung der inneren iterativen Berechnung unter Verwendung des mittleren Werts der Schleifenvariablen, der beibehalten wurde, fortgesetzt wird, wenn die innere iterative Berechnung erneut ausgeführt wird,
wobei der geheimen Eingabewiderspiegelungsschritt (S21), der geheime Schleifenvariablenaktualisierungsschritt (S222), der geheime Endzustandswiderspiegelungsschritt (S223) und der geheime Ausgabeberechnungsschritt (S23) eine Bearbeitung durchführen, während sie sichern, ob ein gegenwärtiger Fall einem Fall entspricht, in dem eine Bedingung erfüllt ist, oder nicht, um einen Wert, der die Bedingung darstellt, oder einen Fall, in dem die Bedingung nicht erfüllt ist, nicht zu offenbaren.

3. Programm zum Veranlassen, dass ein Computer als die jeweiligen Einheiten der Vorrichtung zur sicheren multiiterativen Berechnung nach Anspruch 1 funktioniert.

## Revendications

1. Appareil utilisé dans un calcul multi-itératif sécurisé pour effectuer un calcul itératif sans révéler des valeurs d'entrée et de sortie et sans révéler un nombre d'itérations qui sont requises, l'appareil comprenant :
une unité d'initialisation secrète (1) qui définit une variable de boucle qui est une variable prédéterminée à utiliser dans des calculs itératifs et dont une valeur peut changer pour chaque calcul itératif en tant que valeur fictive et qui définit un état de chaque calcul itératif à « pré-exécution » ; et
une unité de calcul itératif sécurisé (2) qui délivre en sortie un résultat d'exécution d'un calcul itératif qui est un objet de calcul en utilisant une entrée et le nombre prédéterminé d'itérations, dans lequel
l'unité de calcul itératif sécurisé (2) comprend :
(i) une unité de réflexion d'entrée secrète (21) qui, lorsqu'un état d'un calcul itératif d'objet qui est un calcul itératif étant actuellement un objet de calcul est « pré-exécution » et toutes les entrées du calcul itératif d'objet ne sont pas des valeurs fictives, effectue un calcul sécurisé d'une valeur initiale de la variable de boucle du calcul itératif d'objet en utilisant une entrée du calcul itératif d'objet, lorsque le calcul itératif d'objet comprend un calcul itératif intérieur, initialise un état de chaque calcul itératif intérieur à « pré-exécution », et change l'état du calcul itératif d'objet à « exécution en cours » ;
(ii) une unité de mise à jour secrète (22) comprenant : (a) une unité de calcul de variable de boucle secrète (221) qui effectue un calcul sécurisé d'une nouvelle valeur de la variable de boucle du calcul itératif d'objet en utilisant une valeur de la variable de boucle du calcul itératif d'objet obtenue par un calcul sécurisé immédiatement antérieur et, lorsque le calcul itératif d'objet comprend un calcul itératif intérieur, en effectuant un traitement récursif de l'unité de calcul itératif sécurisé (2) par rapport à chaque calcul itératif intérieur ; (b) une unité de mise à jour de variable de boucle secrète (222) qui adopte la nouvelle valeur en tant que valeur de la variable de boucle du calcul itératif d'objet lorsque l'état du calcul itératif d'objet est « exécution en cours » et l'état de chaque calcul itératif à l'intérieur du calcul itératif d'objet est « fin » et qui met à jour l'état de chaque calcul itératif à l'intérieur du calcul itératif d'objet à « pré-exécution » ; et (c) une unité de réflexion d'état de fin secrète (223) qui change l'état du calcul itératif d'objet à « fin » lorsque l'état du calcul itératif d'objet est « exécution en cours » et la valeur de la variable de boucle du calcul itératif d'objet satisfait une condition de fin prédéterminée, l'unité de mise à jour secrète (22) effectuant un traitement pour le nombre prédéterminé d'itérations ; et
(iii) une unité de calcul de sortie secrète (23) qui effectue un calcul sécurisé d'une valeur de sortie du calcul itératif d'objet à partir de la valeur de la variable de boucle et délivre en sortie la valeur de sortie lorsque l'état du calcul itératif d'objet est « fin », dans lequel, lorsque l'état du calcul itératif d'objet n'est pas « fin », la valeur de la variable de boucle du calcul itératif d'objet est conservée et l'unité de calcul de sortie secrète (23) délivre en sortie la valeur fictive sans effectuer le calcul sécurisé de la valeur de sortie du calcul itératif d'objet à partir de la valeur de la variable de boucle, de sorte que lorsqu'un calcul itératif intérieur effectué par l'unité de calcul itératif sécurisé (2) ne se termine pas après le nombre prédéterminé d'itérations, une valeur à mi-chemin de la variable de boucle est conservée et un calcul d'une valeur de sortie n'est pas effectué dans un calcul itératif extérieur et l'exécution du calcul itératif intérieur est poursuivie, en utilisant la valeur à mi-chemin de la variable de boucle ayant été conservée, lorsque le calcul itératif intérieur est exécuté à nouveau,
dans lequel l'unité de réflexion d'entrée secrète (21), l'unité de mise à jour de variable de boucle secrète (222), l'unité de réflexion d'état de fin secrète (223), et l'unité de calcul de sortie secrète (23) effectuent un traitement tout en garantissant si un cas présent correspond ou non à un cas où une condition est satisfaite de manière à ne pas révéler une valeur qui constitue la condition ou un cas où la condition n'est pas satisfaite.

2. Procédé utilisé dans un calcul multi-itératif sécurisé pour effectuer un calcul itératif sans révéler des valeurs d'entrée et de sortie et sans révéler un nombre d'itérations qui sont requises, le procédé comprenant :
une étape d'initialisation secrète (S1) dans laquelle une unité d'initialisation secrète définit une variable de boucle qui est une variable prédéterminée à utiliser dans des calculs itératifs et dont une valeur peut changer pour chaque calcul itératif en tant que valeur fictive et qui définit un état de chaque calcul itératif à « pré-exécution » ; et
une étape de calcul itératif sécurisé (S2) dans laquelle une unité de calcul itératif sécurisé délivre en sortie un résultat d'exécution d'un calcul itératif qui est un objet de calcul en utilisant une entrée et le nombre prédéterminé d'itérations, dans lequel
l'étape de calcul itératif sécurisé (S2) comprend :
(i) une étape de réflexion d'entrée secrète (S21) dans laquelle, lorsqu'un état d'un calcul itératif d'objet qui est un calcul itératif étant actuellement un objet de calcul est « pré-exécution » et toutes les entrées du calcul itératif d'objet ne sont pas des valeurs fictives, une unité de réflexion d'entrée secrète effectue un calcul sécurisé d'une valeur initiale de la variable de boucle du calcul itératif d'objet en utilisant une entrée du calcul itératif d'objet, lorsque le calcul itératif d'objet comprend un calcul itératif intérieur, l'unité de réflexion d'entrée secrète initialise un état de chaque calcul itératif intérieur à « pré-exécution » et change l'état du calcul itératif d'objet à « exécution en cours » ;
(ii) une étape de mise à jour secrète (S22) qui comprend : (a) une étape de calcul de variable de boucle secrète (S221) dans laquelle une unité de calcul de variable de boucle secrète effectue un calcul sécurisé d'une nouvelle valeur de la variable de boucle du calcul itératif d'objet en utilisant une valeur de la variable de boucle du calcul itératif d'objet obtenue par un calcul sécurisé immédiatement antérieur et, lorsque le calcul itératif d'objet comprend un calcul itératif intérieur, en effectuant un traitement récursif de l'unité de calcul itératif sécurisé par rapport à chaque calcul itératif intérieur ; (b) une étape de mise à jour de variable de boucle secrète (S222) dans laquelle une unité de mise à jour de variable de boucle secrète adopte la nouvelle valeur en tant que valeur de la variable de boucle du calcul itératif d'objet lorsque l'état du calcul itératif d'objet est « exécution en cours » et l'état de chaque calcul itératif à l'intérieur du calcul itératif d'objet est « fin » et qui met à jour l'état de chaque calcul itératif à l'intérieur du calcul itératif d'objet à « pré-exécution » ; et (c) une étape de réflexion d'état de fin secrète (S223) dans laquelle une unité de réflexion d'état de fin secrète change l'état du calcul itératif d'objet à « fin » lorsque l'état du calcul itératif d'objet est « exécution en cours » et la valeur de la variable de boucle du calcul itératif d'objet satisfait une condition de fin prédéterminée, l'unité de mise à jour secrète effectuant un traitement pour le nombre prédéterminé d'itérations ; et
(iii) une étape de calcul de sortie secrète (S23) dans laquelle une unité de calcul de sortie secrète effectue un calcul sécurisé d'une valeur de sortie du calcul itératif d'objet à partir de la valeur de la variable de boucle et délivre en sortie la valeur de sortie lorsque l'état du calcul itératif d'objet est « fin », dans lequel, lorsque l'état du calcul itératif d'objet n'est pas « fin », la valeur de la variable de boucle du calcul itératif d'objet est conservée et l'unité de calcul de sortie secrète délivre en sortie la valeur fictive sans effectuer le calcul sécurisé de la valeur de sortie du calcul itératif d'objet à partir de la valeur de la variable de boucle, de sorte que lorsqu'un calcul itératif intérieur effectué par l'unité de calcul itératif sécurisé ne se termine pas après le nombre prédéterminé d'itérations, une valeur à mi-chemin de la variable de boucle est conservée et un calcul d'une valeur de sortie n'est pas effectué dans un calcul itératif extérieur et l'exécution du calcul itératif intérieur est poursuivie, en utilisant la valeur à mi-chemin de la variable de boucle ayant été conservée, lorsque le calcul itératif intérieur est exécuté à nouveau,
dans lequel l'étape de réflexion d'entrée secrète (S21), l'étape de mise à jour de variable de boucle secrète (S222), l'étape de réflexion d'état de fin secrète (S223), et l'étape de calcul de sortie secrète (S23) effectuent un traitement tout en garantissant si un cas présent correspond ou non à un cas où une condition est satisfaite de manière à ne pas révéler une valeur qui constitue la condition ou un cas où la condition n'est pas satisfaite.

3. Programme pour amener un ordinateur à fonctionner en tant qu'unités respectives de l'appareil de calcul multi-itératif sécurisé selon la revendication 1.
